# EUROPÄISCHE PATENTSCHRIFT

(11) **EP 2 464 098 B1**
(45) Veröffentlichungstag und Bekanntmachung des Hinweises auf die Patenterteilung: **20.11.2019**
(21) Anmeldenummer: 11009576.7
(22) Anmeldetag: 03.12.2011
(51) Int. Cl.: H04N 5/232, H04N 5/247, G06T 3/00

(54) **Umfeld-Darstellungsvorrichtung sowie ein Fahrzeug mit einer derartigen Umfeld-Darstellungsvorrichtung und Verfahren zur Darstellung eines Panoramabildes**
Vicinity presentation device, a vehicle with such a vicinity presentation device and method for displaying a panorama image
Dispositif de représentation d'environnement ainsi qu'un véhicule doté d'un tel dispositif de représentation d'environnement et procédé de représentation d'une image panoramique

(30) Priorität: 09.12.2010 DE 102010053895
(43) Veröffentlichungstag der Anmeldung: 13.06.2012
(73) Patentinhaber: Airbus Defence and Space GmbH, 85521 Ottobrunn (DE)
(72) Erfinder: Hadwiger, Peter, 85290 Geisenfeld (DE); Kellerer, Johannes, 85354 Freising (DE)
(74) Vertreter: Schicker, Silvia

(56) Entgegenhaltungen:
- DE-A1-102007 061 273
- DE-C1- 19 736 880
- US-A1- 2008 175 436

## Beschreibung

### TECHNISCHES GEBIET

Die vorliegende Erfindung betrifft eine Umfeld-Darstellungsvorrichtung sowie ein Fahrzeug mit einer derartigen Umfeld-Darstellungsvorrichtung und ein Verfahren zur Darstellung eines Panoramabildes.

### HINTERGRUND DER ERFINDUNG

In der Entwicklung von Flugführungssystemen wird angestrebt, taktische und navigatorische Information einer synthetischen Außensicht auf einer Bildwiedergabeeinrichtung im Flugzeugcockpit überlagert anzuzeigen. Bisherige perspektivische Anzeigen auf Cockpitdisplays beschränken sich auf einen begrenzten Ausschnitt des Luftraums in Flugrichtung. Dieser schmale Winkelbereich vor dem Flugzeug reicht jedoch nicht für Aufgaben des Flugzeugführers aus, bei welchen er den gesamten Luftraum überwachen muss. Es wird dem Flugzeugführer bislang lediglich ein in einem verhältnismäßig schmalen Bildwinkel vor dem Flugzeug liegender Beobachtungsbereich auf der Bildwiedergabeeinrichtung im Cockpit angezeigt.

Diese Problematik der Darstellung eines Beobachtungsbereichs mit großem Bildwinkel auf einer in einem Cockpit befindlichen Bildwiedergabeeinrichtung trifft nicht nur für Flugzeuge zu, sondern besteht auch bei anderen Fahrzeugen, beispielsweise Landfahrzeugen oder Wasserfahrzeugen oder auch in stationären Einrichtungen.

### STAND DER TECHNIK

Aus der US 2009/0309811 A1 ist ein Bildanzeigesystem bekannt, bei welchem ein anzuzeigendes Bild vor der Darstellung auf einer am Kopf eines Benutzers angebrachten Anzeigevorrichtung in den Randbereichen des Bildes komprimiert wird, damit diese Randbereiche, die im peripheren Sichtbereich des Benutzers liegen, stärker verdichtet werden, als der zentrale Bildanzeigebereich. Dieses am Rand komprimierte Bild wird anschließend zur Darstellung auf der Bildwiedergabeeinrichtung wieder gestreckt, so dass das tatsächlich angezeigte Bild unverzerrt über den gesamten Bildwinkel wiedergegeben wird, jedoch am Rand eine wesentlich geringere Auflösung besitzt. Dadurch soll die für die Bildanzeige erforderliche Pixelzahl reduziert werden, wodurch die Auflösung des angezeigten Bildes an das Sehvermögen des Betrachters angepasst wird. Im zentralen Bildbereich wird somit eine hohe Bildauflösung geschaffen, während die Bildauflösung im peripheren Sichtbereich niedrig ist. Der Benutzer erhält somit im Bereich seines zentralen Sehens ein hochaufgelöstes Bild eingeblendet, wohingegen die Auflösung des ihm angezeigten Bildes zu den Randbereichen des Bildes abnimmt. Es wird aber auch erwähnt, dass der Schritt des erneuten Streckens unterbleiben kann.

Aus der US 5,495,576 A ist es bekannt, aus einer Vielzahl von Sensordaten (z.B. Radar, Kamera), die von allen Seiten eines dreidimensionalen Objekts gleichzeitig erfasst werden, ein virtuelles Bild zu generieren, das einem Benutzer auf einer Anzeigevorrichtung angezeigt wird.

Aus der US 2007/0097206 A1 ist ein Panorama-Kamerasystem bekannt, das aus einer Vielzahl von auf einem Fahrzeug angebrachten Kameraeinheiten besteht, die jeweils in unterschiedliche Blickrichtungen rund um das Fahrzeug ausgerichtet sind. Aus den aufgenommenen Bilddaten dieser Kameras wird ein Panoramabild gewonnen, das auf einer Anzeigevorrichtung wiedergegeben wird und einen 360°-Blick um das Fahrzeug herum ermöglicht.

US 2008/0175436 A1 betrifft einen Bildverarbeitungsprozessor, der an einem Fahrzeug aufgenommene Bilder zu einem Panoramabild verbindet. Dafür werden die aufgenommenen Kamerabilder in einem der Fahrzeugbreite entsprechenden Bereich auf eine flache Fläche projiziert und in einem darüber hinausgehenden Bereich auf eine zylindrische Fläche projiziert. Der Bereich, in dem die Bilder auf eine flache Fläche projiziert werden, kann entsprechend einem Lenkeinschlag des Fahrzeugs horizontal verschoben werden. Alternativ kann die Breite des Bereichs in Abhängigkeit des Lenkeinschlag vergrößert werden.

DE 197 36 880 C1 betrifft eine elektronische Brille mit einem Brillengestell, das mindestens eine elektronische Kamera und mindestens ein Display trägt. Insgesamt sind drei elektronische Kameras nahe beieinander mit parallelen optischen Achsen angeordnet. Die erste und zweite Kamera sind hochempfindliche Schwarzweißkameras mit normalem bzw. großem Öffnungswinkel, während die dritte Kamera eine Farbkamera mit dem gleichen Öffnungswinkel wie die erste Kamera ist. Bei ausreichend Licht wird das Bild der Farbkamera verwendet, andernfalls das Bild der Schwarzweißkamera. Das auf dem Display angezeigt Bild enthält eine innere Bildzone, in der das Bild der Kamera mit kleinem Öffnungswinkel nicht verzerrt angezeigt wird, während in einer äußeren Bildzone das Bild der Kamera mit großem Öffnungswinkel nichtlinear wiedergegeben wird, wodurch eine "fischaugenartige" Verzerrung entsteht.

DE 10 2007 061 273 A1 betrifft ein Verfahren zur Darstellung von Fluginformationen, wobei zumindest ein erstes synthetisches Abbild einer Umgebung des Luftfahrzeugs auf Basis von Datenbankinhalten generiert wird. Dabei können Sichtwinkel durch die Nutzung von non-planaren Bildebenen bei einer Projektion ermöglicht werden.

### DARSTELLUNG DER ERFINDUNG

Aufgabe der vorliegenden Erfindung ist es daher, eine Umfeld-Darstellungsvorrichtung anzugeben, mittels der es einem Bediener möglich ist, auf einer Bildwiedergabeeinrichtung einen Beobachtungsbereich unter einem großen Bildwinkel zu sehen, ohne dass Verzerrungen des angezeigten Bildes das situationsbezogene Wahrnehmungsvermögen des Bedieners beeinträchtigen. Weiterhin ist es die Aufgabe der vorliegenden Erfindung, ein Fahrzeug mit einer derartigen Umfeld-Darstellungsvorrichtung sowie ein Verfahren zur Darstellung eines Panoramabildes anzugeben.

Der auf die Umfeld-Darstellungsvorrichtung gerichtete Teil der Aufgabe wird gelöst durch die Umfeld-Darstellungsvorrichtung mit den Merkmalen des Anspruchs 1.

Dazu ist die Umfeld-Darstellungsvorrichtung versehen mit zumindest einer Bildquelle; einer Bildsignalverarbeitungseinrichtung und zumindest einer Bildwiedergabeeinrichtung; wobei die von der Bildquelle gelieferten Eingangs-Bildsignale der Bildsignalverarbeitungseinrichtung zugeführt werden; wobei die Bildsignalverarbeitungseinrichtung die ihr zugeführten Eingangs-Bildsignale zu Ausgangs-Bildsignalen eines Panoramabildes verarbeitet; wobei die Ausgangs-Bildsignale von der Bildsignalverarbeitungseinrichtung an die Bildwiedergabeeinrichtung zur Anzeige des Panoramabildes weitergeleitet werden und wobei die Bildsignalverarbeitungseinrichtung die Eingangs-Bildsignale derart verarbeitet, dass zumindest ein erster Bereich des Panoramabildes unverzerrt oder in einem ersten Stauchungsgrad gestaucht und zumindest ein zweiter Bereich des Panoramabildes in einem zweiten Stauchungsgrad gestaucht wiedergegeben werden. Dabei ist die Bildsignalverarbeitungseinrichtung so ausgebildet, dass der Anteil der unverzerrt beziehungsweise gestaucht wiedergegebenen Bereiche am gesamten Panoramabild variabel wählbar ist; dass der jeweilige Stauchungsgrad der gestaucht wiedergegebenen Bereiche beliebig wählbar ist und dass diese Veränderungen der gestaucht wiedergegebenen Bereiche während des Betriebs der Umfeld-Darstellungsvorrichtung erfolgen können. Der einem unverzerrt beziehungsweise gestaucht wiedergegebenen Bereich entsprechende Sichtwinkel ist in einer horizontalen Ebene zwischen 0° und 360° beliebig wählbar und auch der einem unverzerrt beziehungsweise gestaucht wiedergegebenen Bereich entsprechende Sichtwinkel in einer vertikalen Ebene ist zwischen dem Nadir-Sichtwinkel von -90° und dem Zenith-Sichtwinkel von +90° beliebig wählbar.

### VORTEILE

Die Bildsignalverarbeitungseinrichtung in der erfindungsgemäßen Umfeld-Darstellungsvorrichtung gestattet es, die von einer Bildquelle oder von mehreren Bildquellen erzeugte Bildinformation, die der Bildsignalverarbeitungseinrichtung als Eingang-Bildsignale zugeführt wird, derart aufzubereiten, dass die horizontale und/oder vertikale Verdichtung des Bildwinkels, der von der Bildquelle beziehungsweise von den Bildquellen abgedeckt wird, auf einen Bildwinkel, der dem Blickwinkel des Bedieners auf die Bildwiedergabeeinrichtung entspricht, nicht über die gesamte Fläche des auf der Bildwiedergabeeinrichtung angezeigten Panoramabildes mit demselben Stauchungsgrad gestaucht wird, sondern mit unterschiedlichen horizontalen und/oder vertikalen Stauchungsgraden. Aufgrund der wählbaren Sichtwinkel kann eine beliebige Auswahl des zu stauchenden und auf dem Panoramabildschirm anzuzeigenden Sichtwinkelbereichs aus dem vollständigen, den Benutzer beziehungsweise die jeweilige Sensorposition umgebenden Sichtbereich getroffen werden.

Ein vorteilhafter Sonderfall ist dann gegeben, wenn eine Stauchung nur in einem Teil des Panoramabildes erfolgt, während ein anderer Teil des Panoramabildes, der in der Regel der Hauptblickrichtung des Bedieners entspricht, in welcher der Bediener Objekte unverfälscht sehen und erkennen können muss, unverzerrt wiedergegeben wird.

Auf diese Weise ist es möglich, dass der Bediener, beispielsweise der Fahrzeugführer oder Flugzeugführer, den für das Steuern des Fahrzeugs beziehungsweise Flugzeugs erforderlichen Bereich seines Sichtfeldes korrekt von der Bildwiedergabeeinrichtung angezeigt bekommt, dass er andererseits aber auch einen Bereich seitlich sowie gegebenenfalls oberhalb und unterhalb dieser Hauptblickrichtung auf der Bildwiedergabeeinrichtung sehen kann, der zwar gestaucht, also verzerrt, ist, aber in welchem der Bediener Wahrnehmungen machen kann, die sich außerhalb seines natürlichen Sichtfeldes ereignen.

Während im Stand der Technik die unverzerrte Wiedergabe stets auf den zentralen Blickwinkel des Bedieners beschränkt ist und die gestauchten Bildanteile im peripheren Randbereich vorgesehen sind, ist der Anteil des gestaucht wiedergegebenen zweiten Bereichs bei der erfindungsgemäßen Umfeld-Darstellungsvorrichtung variabel und darüber hinaus ist der Stauchungsgrad des zweiten Bereichs beliebig wählbar. Diese Veränderungen des gestaucht wiedergegebenen zweiten Bereichs können beliebig während des Betriebs der Umfeld-Darstellungsrichtung erfolgen.

Diese Variabilität, die aus dem Stand der Technik nicht bekannt ist, ermöglicht es, dass entweder der Bediener selbst den Anteil des gestauchten Bereichs und den Stauchungsgrad auswählt oder dass beispielsweise bei einer aus einer bestimmten Richtung drohenden Gefahr (zum Beispiel einer auf ein Flugzeug anfliegenden Rakete, die von einem flugzeugeigenen Sensor erfasst wird) automatisch der Gefahrenbereich auf der Bildwiedergabeeinrichtung unverzerrt wiedergegeben wird, auch wenn dieser Gefahrenbereich in einem vorher gestaucht wiedergegebenen zweiten Bereich des Panoramabildes lag.

Vorzugsweise ist die Bildsignalverarbeitungseinrichtung so ausgebildet, dass zumindest ein weiterer Bereich des Panoramabildes mit einem vom ersten und zweiten Stauchungsgrad abweichenden weiteren Stauchungsgrad wiedergegeben werden kann. Diese Ausführungsform gestattet es, das Panoramabild bereichsweise beliebig mit unterschiedlichen Stauchungsgraden zu stauchen. Beispielsweise können für eine aktuelle Bediensituation weniger wichtige Bereiche des Panoramabildes stark gestaucht und für die aktuelle Bediensituation wichtige Bereiche weniger stark gestaucht oder gar unverzerrt wiedergegeben werden. Die Auswahl dieser Bereiche kann entweder manuell vom Bediener erfolgen oder kann automatisch von einer entsprechenden Navigations- oder Fahrzeugführungs-Unterstützungseinrichtung vorgenommen werden. Die Auswahl der zu stauchenden Bereiche und die Auswahl des einem jeweiligen Bereich zuzuordnenden Stauchungsgrads erfolgt während der Laufzeit, so dass in jeder Bediensituation eine individuelle Darstellung des Panoramabildes manuell oder automatisch einstellbar ist.

Vorzugsweise ist eine Mehrzahl von Bildquellen vorgesehen, wobei die Blickrichtungen der Bildquellen in unterschiedliche Richtungen, vorzugsweise ausgehend von einem das Umfeld beobachtenden Bediener, um den Bediener herum ausgerichtet sind. Auf diese Weise kann ein sehr großer Beobachtungswinkel von der Umfeld-Darstellungsvorrichtung abgedeckt werden.

In einer bevorzugten Ausführungsform weist zumindest eine der Bildquellen eine Datenverarbeitungseinrichtung auf, die ausgebildet ist, um Bilddaten eines gespeicherten digitalen Geländemodells als Bildsignale an die Bildsignalverarbeitungseinrichtung zu übertragen. Dieses Einspeisen von Bilddaten eines gespeicherten digitalen Geländemodells als realitätskonforme Abbildung einer virtuellen Sicht in eine bestimmte Blickrichtung kann ohne zusätzliche Bildquellen-Hardware mittels eines Computers erfolgen. Die Verwendung von Daten eines gespeicherten digitalen Geländemodells als Bildsignale besitzt im Vergleich zur Gewinnung von Bildsignalen mittels Sensoren in Echtzeit eine Vielzahl von Vorteilen. Die in einem digitalen Geländemodell gespeicherten Daten können wesentlich genauer sein, da sie beispielsweise mit aufwendigeren Messmethoden gewonnen werden können, als dies in Echtzeit mit Bordmitteln möglich ist. Des Weiteren ist die Verwendung von Bilddaten eines gespeicherten digitalen Geländemodells wetterunabhängig. Auch unterliegen die Daten des Geländemodells keiner Abschattung, wie dies bei einer Datengewinnung mittels Sensoren in Echtzeit der Fall sein kann, beispielsweise durch Geländestrukturen in dem von einem Bildsensor zu erfassenden Gebiet. Während Sensoren für die Echtzeit-Gewinnung von Bilddaten einer Reichweitenbegrenzung unterliegen, gibt es bei der Verwendung von Bilddaten eines gespeicherten digitalen Geländemodells keine Reichweitenbeschränkungen, sofern sich der Nutzer im gespeicherten Geländemodell bewegt. Ein weiterer wichtiger Vorteil der Verwendung von Bilddaten eines gespeicherten digitalen Geländemodells im Vergleich zu einer Bilddatengewinnung mittels aktiver, also ein Signal ausstrahlender, Sensoren ist die Tatsache, dass der Zugriff auf die Bilddaten des gespeicherten digitalen Geländemodells "still" erfolgt, was insbesondere im militärischen Einsatzfall wichtig ist, um zu verhindern, dass sich der Nutzer durch das Abstrahlen eines Signals von einem aktiven Sensor zur erkennen gibt.

Vorzugsweise ist zumindest eine der Bildquellen von zumindest einem Sensor gebildet, der ausgebildet ist, um sich annähernde Objekte zu erfassen und aus der Erfassung resultierende Positionsdaten des Objekts als Bildsignale an die Bildsignalverarbeitungseinrichtung zu übertragen. Mit dieser Variante können Sensoren, die zum Beispiel anfliegende Objekte im nicht sichtbaren Licht (Radar- oder Infrarot-Sensoren) detektieren, in ein aus mehreren Bildquellen bestehendes Gesamtsystem integriert werden. Insbesondere dann, wenn diese Sensorsignale einem digitalen Geländemodell überlagert werden, kann unter Erzielung der schon genannten Vorteile des digitalen Geländemodells eine zuverlässige Darstellung eines sich dem Bediener nähernden Objekts auf der Bildwiedergabeeinrichtung erfolgen.

In einer anderen bevorzugten Ausführungsform ist zumindest eine der Bildquellen von einer Bilderfassungseinrichtung, beispielsweise einer Videokamera gebildet. Diese Variante eignet sich besonders dann, wenn der in Blickrichtung des Betrachters liegende Bereich, beispielsweise ein vor einem Fahrzeug befindlicher Streckenabschnitt, als Live-Bild in das für die Anzeige auf der Bildwiedergabeeinrichtung erzeugte Panoramabild integriert werden soll.

Dabei sind die Blickrichtungen der Bildquellen vorzugsweise so ausgerichtet, dass die Bildquellen zumindest in einer ersten Ebene Bildinformationen eines Sichtfelds mit einem Bildwinkel von größer als 120°, vorzugsweise größer als 180°, weiter vorzugsweise von 360° erfassen. Die horizontale Ausdehnung des von beiden Augen eines Menschen erfassten Sichtfeldes reicht bis etwa 180°, wobei sich die Wahrnehmung dabei jedoch zum äußeren Rand hin auf sich bewegende Objekte reduziert und eine konkrete Objekterkennung im Randbereich des Sichtfeldes nicht mehr möglich ist. Die erfindungsgemäße Umfeld-Darstellungsvorrichtung liefert bereits dann, wenn das horizontale Sichtfeld, das von den Bildquellen oder von der Bildquelle abgedeckt wird, zwischen 120° und 180° beträgt, einen deutlich gesteigerten Informationsgewinn, da der Bediener auf der Bildwiedergabeeinrichtung auch in den Randbereichen seines Gesichtsfeldes befindliche Objekte nicht nur anhand der Bewegung wahrnehmen, sondern auch erkennen und gegebenenfalls identifizieren kann.

Besonders vorteilhaft ist es, wenn der Bereich des Panoramabildes, der der Blickrichtung des Bedieners entspricht, unverzerrt wiedergegeben wird. Dies ermöglicht es dem Bediener, stets den für sein Informationsbedürfnis wichtigen Bereich deutlich und unverzerrt sehen zu können.

Vorzugsweise erhält die Bildsignalverarbeitungseinrichtung Information über die aktuelle Blickrichtung des Bedieners, so dass der unverzerrt wiedergegebene Bereich des Panoramabildes der aktuellen Blickrichtung des Bedieners entspricht, auch wenn dieser sich bewegt und dabei seine Blickrichtung ändert. Eine derartige automatische Anpassung des unverzerrt wiedergegebenen Bereichs an die aktuelle Blickrichtung des Bedieners ermöglicht es, den unverzerrt wiedergegebenen Bereich des auf der Bildwiedergabeeinrichtung angezeigten Panoramabildes wandern zu lassen, wenn der Bediener seine Blickrichtung ändert. Dadurch kann erreicht werden, dass nicht der gesamte Blickwinkel, der dem natürlichen Sichtfeld des Bedieners entspricht, unverzerrt wiedergegeben werden muss, sondern dass lediglich ein zentraler, enger Blickwinkel aus der Bildwiedergabeeinrichtung unverzerrt wiedergegeben zu werden braucht.

Vorteilhaft ist es aber auch, wenn der Bediener die Bildsignalverarbeitungseinrichtung derart beeinflussen kann, dass er Bereiche des ihm auf der Bildwiedergabeeinrichtung angezeigten Panoramabildes auswählen kann, die unverzerrt wiedergegeben werden sollen. Auf diese Weise ist es möglich, dass der Bediener ein im an sich verzerrt wiedergegebenen seitlichen Bereich des Panoramabildes entdecktes Objekt durch Verlagerung des unverzerrt wiedergegebenen Bereichs des Panoramabildes oder durch Schaffung eines zusätzlichen unverzerrt wiedergegebenen Bereichs unverzerrt ansehen kann.

Vorzugsweise ist die Umfeld-Darstellungsvorrichtung Teil eines Fahrzeugs, insbesondere eines Luftfahrzeugs, und die Bildquelle ist beziehungsweise die Bildquellen sind am Fahrzeug angeordnet und liefern bevorzugt eine zumindest halbkreisförmige oder vollkreisförmige Darstellung ausgehend vom Fahrzeug. Diese Ausgestaltungsform der erfindungsgemäßen Umfeld-Darstellungsvorrichtung ist für viele Anwendungsbereiche, in denen das Geschehen in den seitlichen Abschnitten des natürlichen Sichtfeldes eines Fahrzeugführers bedeutsam sein kann, bei verhältnismäßig geringem Aufwand besonders vorteilhaft, da sich hierdurch ein spürbarer Informationsgewinn ergibt.

Vorzugsweise gibt der unverzerrte Bereich des Panoramabildes einen in Fahrtrichtung liegenden Bildsektor wieder. Dies ermöglicht es dem Fahrzeugführer, das Fahrzeug auch ausschließlich anhand des auf der Bildwiedergabeeinrichtung angezeigten Panoramabildes zu steuern, was beispielsweise in gepanzerten Fahrzeugen oder auch bei ferngesteuerten Fahrzeugen, bei denen sich der Fahrzeugführer und die Bildwiedergabeeinrichtung außerhalb des Fahrzeugs befinden, einen großen Vorteil darstellt.

In einer weiteren bevorzugten Ausgestaltungsform nimmt die Stauchung der Bildwiedergabe vom unverzerrt wiedergegebenen Bereich des Panoramabildes zu dessen Seiten hin zu. Dadurch wird der Bereich des Panoramabildes, der für die aktuelle Hauptblickrichtung weniger relevant ist, weniger Platz auf der Bildwiedergabeeinrichtung einnehmen, so dass der verbleibende Platz für die weniger verzerrt oder unverzerrt wiedergegebenen Bereiche des Panoramabildes besser genutzt werden kann.

Eine besonders vorteilhafte Anwendung der Umfeld-Darstellungsvorrichtung gemäß der vorliegenden Erfindung erfolgt in einem Fahrzeug, insbesondere in einem Luftfahrzeug, das mit einer erfindungsgemäßen Umfeld-Darstellungsvorrichtung ausgestattet ist, die ebenfalls die vorgenannten vorteilhaften Weiterbildungen aufweisen kann.

Dabei erfolgt die Anwendung der Umfeld-Darstellungsvorrichtung in besonders vorteilhafter Weise dann wenn es sich bei dem Fahrzeug um ein unbemanntes Fahrzeug, beispielsweise ein unbemanntes Luftfahrzeug, handelt. In diesem Fall ist die Bildwiedergabeeinrichtung in einer außerhalb des Fahrzeugs vorgesehenen Fernsteuerungseinheit vorgesehen. Die Bildsignal-Verarbeitungseinrichtung kann im Fahrzeug oder in der Fernsteuerungseinheit vorgesehen sein. Die entsprechenden Bildsignale werden zwischen dem Fahrzeug und der Fernsteuerungseinheit, vorzugsweise drahtlos, übertragen.

Der auf das Verfahren gerichtete Teil der Aufgabe wird gelöst durch das im Patentanspruch 15 angegebene Verfahren zur Darstellung eines Panoramabildes für einen Bediener auf einer Bildwiedergabeeinrichtung einer erfindungsgemäßen Umfeld-Darstellungsvorrichtung. Dieses Verfahren weist die folgenden Schritte auf:
- Bereitstellen von Eingangs-Bildsignalen, die von zumindest einer Bildquelle geliefert werden;
- Verarbeiten der Eingangs-Bildsignale zu Ausgangs-Bildsignalen für das Panoramabild derart, dass zumindest ein erster Bereich des Panoramabildes unverzerrt oder in einem ersten Stauchungsgrad gestaucht und zumindest ein zweiter Bereich des Panoramabildes in einem zweiten Stauchungsgrad gestaucht sind,
- Weiterleiten der Ausgangs-Bildsignale an die Bildwiedergabeeinrichtung und
- Anzeigen des Panoramabildes auf der Bildwiedergabeeinrichtung,
wobei der jeweilige Stauchungsgrad der gestaucht wiedergegebenen Bereiche jeweils individuell beliebig variabel wählbar ist,
wobei der jeweilige Stauchungsgrad der gestaucht wiedergegebenen Bereiche jeweils individuell beliebig variabel wählbar ist,
wobei diese Veränderungen der gestaucht wiedergegebenen Bereiche während des Betriebs der Umfeld-Darstellungsvorrichtung erfolgen können,
wobei ein einem unverzerrt beziehungsweise gestaucht wiedergegebenen Bereich entsprechender Sichtwinkel in einer horizontalen Ebene zwischen 0° und 360° beliebig wählbar ist, und
wobei ein einem unverzerrt beziehungsweise gestaucht wiedergegebenen Bereich entsprechender Sichtwinkel in einer vertikalen Ebene zwischen -90° und +90° beliebig wählbar ist.

Durch die Verarbeitung der Eingangs-Bildsignale gemäß dem erfindungsgemäßen Verfahren wird erreicht, dass aus den von der Bildquelle oder von den Bildquellen gewonnenen Eingangs-Bildsignalen Ausgangs-Bildsignale erzeugt werden, die auf der Bildwiedergabeeinrichtung ein Panoramabild anzeigen, welches in unterschiedlichen Bereichen unterschiedlich verzerrt wiedergegeben wird, wobei die Verzerrungen, insbesondere Stauchungen, in einer oder zwei Dimensionen während der Anzeige, also beliebig zur Laufzeit, eingestellt werden können.

Eine Bedienperson kann bei einer vorteilhaften Weiterbildung dieses Verfahrens auswählen, wo auf dem Panoramabild eine unverzerrte oder verzerrte Wiedergabe erfolgen soll. Dies kann beispielsweise derart erfolgen, dass die Bedienperson diesen unverzerrt oder verzerrt wiederzugebenden Bereich auf der als berührungsempfindlicher Bildschirm ausgestalteten Bildwiedergabeeinrichtung berührt oder die Bedienperson kann durch an sich bekannte Bedienungsmittel an der Bildwiedergabeeinrichtung einen Cursor an der gewünschten Stelle platzieren, an der die unverzerrte oder verzerrte Bildwiedergabe erfolgen soll.

Alternativ oder zusätzlich kann auch vorgesehen sein, dass aufgrund eines automatisch detektierten Objekts oder Ereignisses eine automatische Bestimmung eines unverzerrt oder weniger verzerrt wiederzugebenden Bereichs des auf der Bildwiedergabeeinrichtung angezeigten Panoramabilds erfolgt. So kann beispielsweise dann, wenn ein Sensor ein sich aus einer bestimmten Richtung näherndes Objekt detektiert, der Bereich, in dem sich dieses Objekt befindet, automatisch unverzerrt oder weniger verzerrt auf der Bildwiedergabeeinrichtung wiedergegeben werden.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: ein Luftfahrzeug mit einer erfindungsgemäßen Umfeld-Darstellungsvorrichtung;
- Fig. 2: eine schematische Darstellung der Bestandteile einer erfindungsgemäßen Umfeld-Darstellungsvorrichtung gemäß Fig. 1;
- Fig. 3: ein gepanzertes Fahrzeug mit einer erfindungsgemäßen Umfeld-Darstellungsvorrichtung;
- Fig. 4: eine schematische Darstellung der Bestandteile einer erfindungsgemäßen Umfeld-Darstellungsvorrichtung gemäß Fig. 3;
- Fig. 5: ein Beispiel einer klassischen Sichtfeldaufweitung;
- Fig. 6: ein Beispiel einer Sichtfeldaufweitung mit einem erfindungsgemäß vorgesehenen unverzerrten Bereich.

### DARSTELLUNG VON BEVORZUGTEN AUSFÜHRUNGSBEISPIELEN

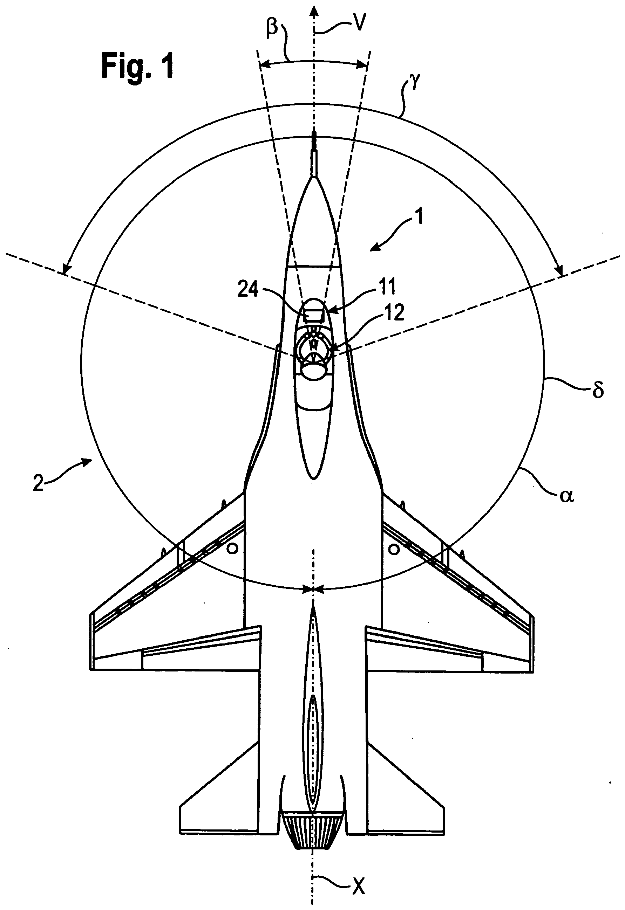

In Fig. 1 ist ein Flugzeug 1 dargestellt, das mit der erfindungsgemäßen Umfeld-Darstellungsvorrichtung 2 ausgestattet ist. Dazu weist das Flugzeug 1 eine Mehrzahl von Bildquellen auf. In Fig. 1 sind auch das Cockpit 11 des Flugzeugs 1 sowie der Flugzeugführer 12 als Bedienperson für die Umfeld-Darstellungsvorrichtung 2 zu erkennen, wobei im Cockpit 11 schematisch eine Bildwiedergabeeinrichtung 24 der Umfeld-Darstellungsvorrichtung 2 gezeigt ist.

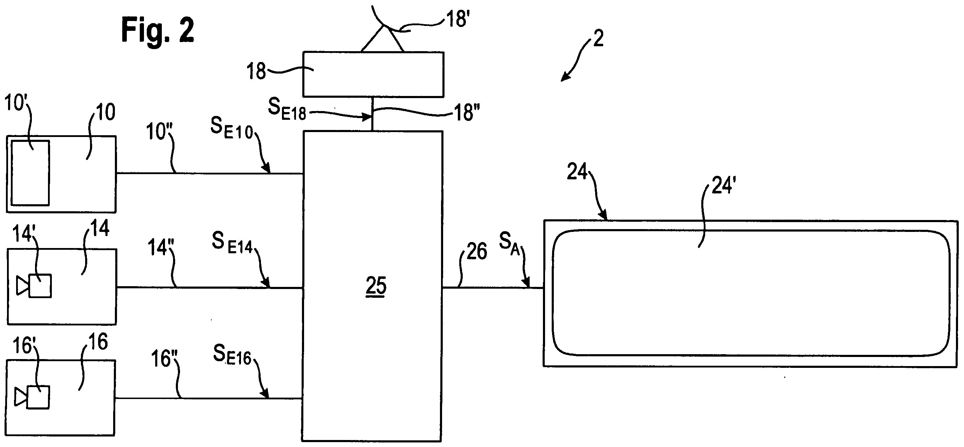

Als erste Bildquelle ist ein in einem Datenspeicher 10' eines Computers 10 (Fig. 2) gespeichertes digitales Geländemodell der Umgebung, in welchem sich das Flugzeug aktuell befindet, vorgesehen. Das von dieser synthetischen Bildquelle gelieferte virtuelle Bild erstreckt sich in einem horizontalen Bildwinkel von α = 360° um das Flugzeug herum. Diese synthetische Außensicht wird aus einem oder mehreren im Speicher 10' des Computers 10 abgelegten digitalen Geländemodell(en) erzeugt, die eine Datenbasis für die Bilddaten bilden. Hierzu "filmt" eine virtuelle Kamera eines im Computer ablaufenden Bilderzeugungsprogramms ein digitales Geländemodell, um ein computergestütztes dynamisches Bild zu erzeugen, dessen Bilddaten als Eingangs-Bildsignale S_{E10} über eine Datenleitung 10" an die Bildsignalverarbeitungseinrichtung 25 übertragen werden, wie in Fig. 2 zu sehen ist.

Die Bildsignalverarbeitungseinrichtung 25 bildet in weiter unten noch beschriebener Weise ein Ausgangsbildsignal S_{A}, das über eine Datenleitung 26 an die Bildwiedergabeeinrichtung 24 weitergeleitet und dort als Panoramabild 24' angezeigt wird. Dadurch wird die Umgebung, während sich das Flugzeug durch die Umwelt bewegt, als synthetische perspektivische Außensicht auf der Bildwiedergabeeinrichtung dargestellt. Diese synthetische Außensicht kann durch weitere Informationsquellen inhaltlich ergänzt oder von weiteren Bildinhalten ganz oder teilweise überlagert werden.

Als weitere Bildquelle ist das Flugzeug mit zumindest einer Bilderfassungseinrichtung 14 versehen, die als bildgebenden Sensor einen Bilderfassungssensor 14' aufweist, der beispielsweise von einer optischen Kamera oder einer Infratorkamera gebildet ist. Dieser bildgebende Sensor erfasst im gezeigten Beispiel einen sehr schmalen, in Flugrichtung liegenden Bildsektor von + / - 10 ° in Bezug auf die Flugzeuglängsachse X, also einen horizontalen Bildwinkel von β = 20 °. Die von diesem bildgebenden Sensor gelieferten Bildsignale S_{E14} werden über eine Datenleitung 14" der Bildsignalverarbeitungseinrichtung 25 zugeführt und werden von dieser als reales Bild der Umgebung in das Panoramabild integriert.

Des Weiteren ist als Bildquelle eine Objekterkennungseinrichtung 16 mit einem oder mehreren Tracking-Sensoren 16' vorgesehen, die Objekte erkennen und Information über diese Objekte ermitteln kann. Derartige Tracking-Sensoren sind beispielsweise Infrarot-Tracking-Sensoren, Radar-Tracking-Sensoren, IFF-Sensoren (identification friend/foe) oder sogenannte ELS-Sensoren (Emitter-Locator-System), welche eine Radarstation lokalisieren können, die einen Radar-Suchstrahl aussendet. Diese Tracking-Sensoren können in einem in Flugrichtung gelegenen Winkelbereich von + / - 70 °, also in einem horizontalen Bildwinkel von γ = 140 °, Objekte erkennen und unterschiedliche Information über diese Objekte ermitteln, wie beispielsweise deren Position, Geschwindigkeit oder Bewegungsrichtung. Diese Information wird über eine Datenleitung 16" als Eingangs-Bildsignal S_{E16} an die Bildsignalverarbeitungseinrichtung 25 übertragen und von dieser in das auf der Bildwiedergabeeinrichtung angezeigte Panoramabild integriert. Dadurch wird die Bildansicht zusätzlich informatorisch aufgewertet. Der Bediener muss in diesem Fall die Objekterkennung nicht selbst leisten, sondern die Anwesenheit eines Objektes sowie dessen Eigenschaften werden dem Bediener auf der Bildwiedergabeeinrichtung 25 durch in entsprechendes Symbol angezeigt.

Schließlich kann auch über Datenfunk mittels eines die Bildquelle bildenden Empfängers 18 und einer Antenne 18' empfangene Überwachungsinformation als Eingangs-Bildsignale S_{E18} über eine Datenleitung 18" an die Bildsignalverarbeitungseinrichtung 25 übertragen werden. Diese Überwachungsinformation wird beispielsweise von einer Radarstation am Boden oder von anderen Luft-Aufklärungsflugzeugen (z.B. AWACS) gesendet und stellt ein Track-Reporting-Signal dar, das aus der Überwachung des gesamten Umfelds des Flugzeugs 1 unter einem horizontalen Bildwinkel von δ = 360 ° resultiert. Diese aus anderen Informationsquellen stammende Überwachungsinformation wird somit der Bildsignalverarbeitungseinrichtung 25 zugeführt und von dieser in geeigneter Weise, zum Beispiel als Symboldarstellung, in das auf der Bildwiedergabeeinrichtung angezeigte Panoramabild der beispielsweise zum Teil synthetischen und zum Teil realen Außenansicht integriert.

Es kann folglich in die von dem digitalen Geländemodell erzeugte synthetische Außensicht zusätzliche Bildinformation aus unterschiedlichen anderen Bildquellen oder Informationsquellen, wie beispielsweise optischen Kameras oder Infrarot-Kameras oder auch mittels anderer Verfahren erzeugter Bildsignale, wie einem bildgebenden Radar, integriert werden. Dabei wir die von den bildgebenden Sensoren der Bildquellen erfasste reale Umgebung auf der Bildwiedergabeeinrichtung abgebildet. Diese Abbildung der realen Umgebung kann in dem der Blickrichtung des betreffenden Sensors entsprechenden Winkelbereich anstelle oder zusätzlich zur synthetischen Außensicht des digitalen Geländemodells angezeigt werden.

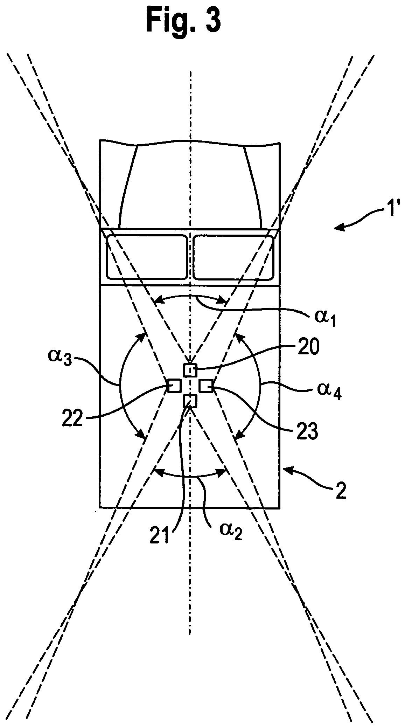

Fig. 3 zeigt eine alternative Anwendung der erfindungsgemäßen Umfeld-Darstellungsvorrichtung 2 in einem gepanzerten Fahrzeug 1'. Dieses Fahrzeug 1' weist vier Bilderfassungseinrichtungen 20, 21, 22, 23 als Bildquellen, beispielsweise im sichtbaren Licht arbeitende Kameras, auf. Es können aber alternativ oder zusätzlich auch Bilderfassungseinrichtungen vorgesehen sein, die in Wellenlängenbereichen arbeiten, die außerhalb des sichtbaren Lichts liegen, beispielsweise im Infrarotbereich.

Eine erste Bilderfassungseinrichtung 20 ist in Fahrtrichtung nach vorne gerichtet und besitzt einen Bilderfassungsbereich mit einem horizontalen Bildwinkel α₁ von 60°. Am Fahrzeug ist eine nach rückwärts gerichtete Bilderfassungseinrichtung 21 mit einem horizontalen Bildwinkel α₂ von 90° angebracht. Zusätzlich sind am Fahrzeug 1' jeweils zur linken beziehungsweise zur rechten Seite gerichtete Bilderfassungseinrichtungen 22, 23 vorgesehen, die jeweils einen horizontalen Bildwinkel α₃, α₄ von 120° abdecken. Auf diese Weise ist mit den vier Bilderfassungseinrichtungen 20, 21, 22, 23 eine 360° Rundumsicht um das Fahrzeug 1' möglich.

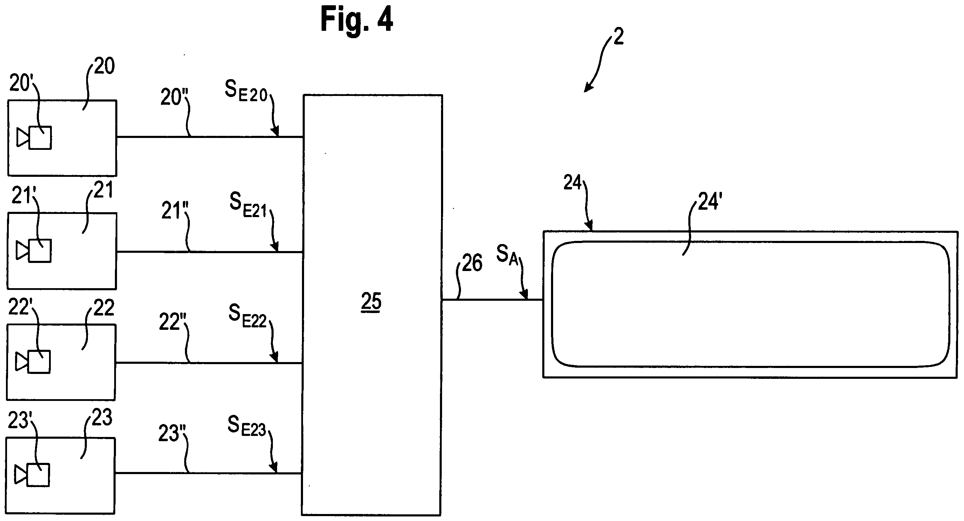

In Fig. 4 ist schematisch der Aufbau der Umfeld-Darstellungsvorrichtung 2 für diesen Anwendungsfall gezeigt. Die Bilderfassungseinrichtungen 20, 21, 22, 23 sind jeweils mit einem Bilderfassungssensor 20', 21', 22', 23' versehen, der aus einem optisch gewonnenen Bild elektronische Bilddaten erzeugt. Diese in jeder der Bilderfassungseinrichtungen 20, 21, 22, 23 erzeugten Bilddaten werden als Bildsignale S_{E20}, S_{E21}, S_{E22}, S_{E23} über entsprechende Datenleitungen 20", 21", 22", 23" von der jeweiligen Bilderfassungseinrichtung 20, 21, 22, 23 an die Bildsignalverarbeitungseinrichtung 25 weitergeleitet.

Nachstehend wird die Arbeitsweise der erfindungsgemäßen Umfeld-Darstellungsvorrichtung anhand der beiden vorstehend beschriebenen Beispiele erläutert.

In der Bildsignalverarbeitungseinrichtung 25 werden die eingehenden Bildsignale S_{E10}, S_{E14}, S_{E16}, S_{E18} beziehungsweise S_{E20}, S_{E21}, S_{E22}, S_{E23} fusioniert und es wird aus der in ihnen jeweils enthaltenen Bildinformation eine Gesamt-Bildinformation gebildet, in der die von den einzelnen Bildquellen 10, 14, 16, 18 beziehungsweise 20, 21, 22, 23 gelieferte Bildinformation zu einem Gesamtbild als Panoramabild zusammengefügt ist. Diese Gesamt-Bildinformation wird dann einer nachstehend beschriebenen Bildverarbeitung unterzogen und als Ausgangs-Bildsignal S_{A} über eine weitere Bilddatenleitung 26 von der Bildverarbeitungseinrichtung 25 an die Bildwiedergabeeinrichtung 24 weitergeleitet, die beispielsweise von einem Panoramabildschirm gebildet sein kann.

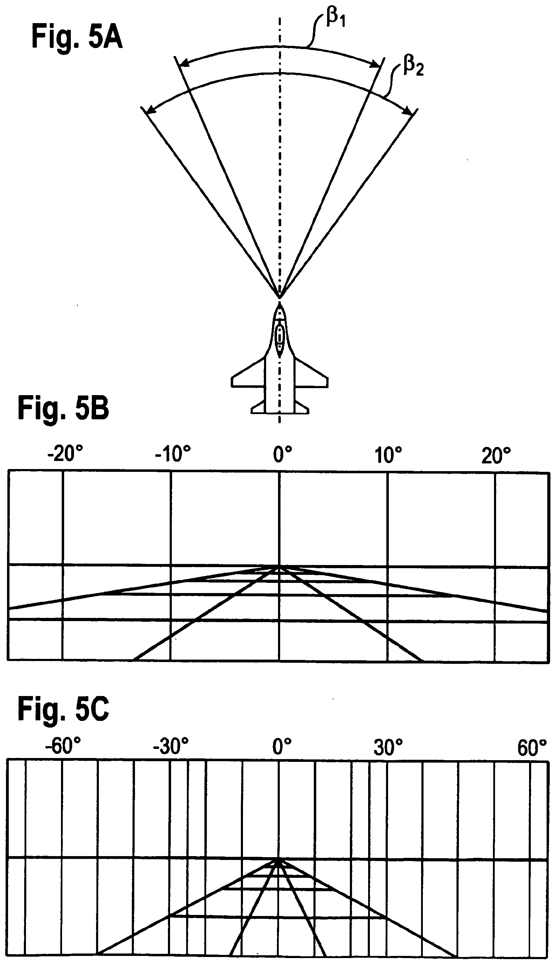

Aufgrund der auf diese Weise erfolgenden Aufweitung des Sichtfeldes für den Bediener (z.B: den Flugzeugführer oder den Fahrzeugführer) 12 tritt zunächst eine Stauchung des auf der Bildwiedergabeeinrichtung angezeigten Sichtfeldes auf, wie in Fig. 5A bis 5C anhand eines weiteren Beispiels gezeigt ist.

Fig. 5B zeigt die schematische Darstellung des sich dem Bediener, zum Beispiel dem Flugzeugführer bei seinem Blick in Flugrichtung, bietenden Sichtfeldes mit einem horizontalen Blickwinkel von etwa 50°. Wird dieses Sichtfeld auf der Bildwiedergabeeinrichtung 24 dargestellt, so ergibt sich die unverzerrte Darstellung gemäß Fig. 5B. Dieses Sichtfeld entspricht dem Blickwinkel β₁ in Fig. 5A.

Wird nun durch die erfindungsgemäße Umfeld-Darstellungsvorrichtung das Sichtfeld vergrößert, was durch den horizontalen Blickwinkel β₂ in Fig. 5A symbolhaft dargestellt ist, und wird dieses größere Sichtfeld auf derselben Bildwiedergabeeinrichtung dargestellt, wie in Fig. 5C gezeigt ist, so ergibt sich eine horizontale Stauchung der gesamten Abbildung.

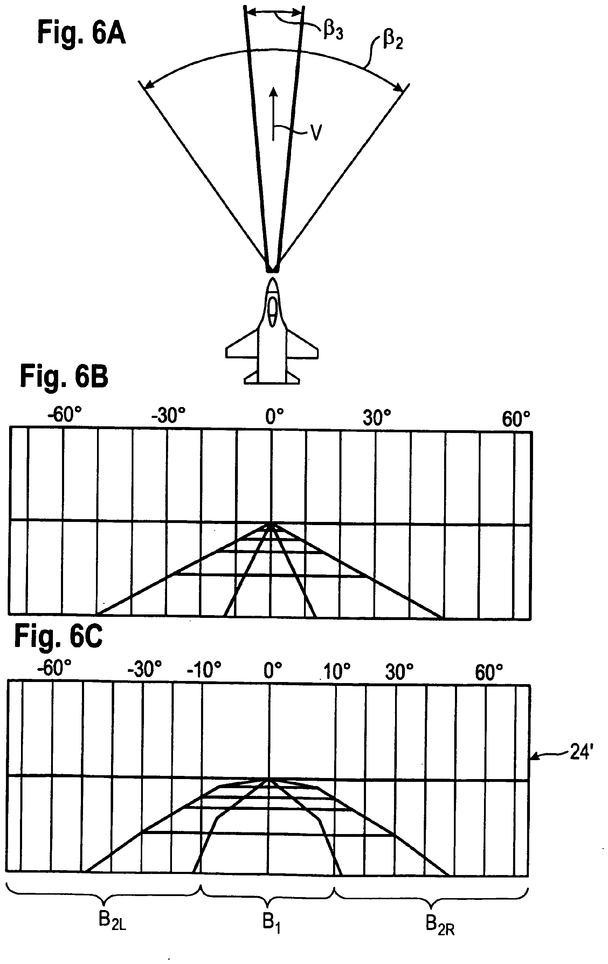

Diese horizontale Stauchung wird in der Bildverarbeitungseinrichtung 25 anschließend in einem mittleren Bereich, der dem Blick des Flugzeugführers 12 in Flugrichtung entspricht, wieder aufgeweitet, so dass sich in dem mittleren Bereich B₁, der sich in dem in Fig. 6A bis 6C gezeigten Beispiel über einen horizontalen Blickwinkel β₃ von zirka 20° (Fig. 6A) erstreckt, eine unverzerrte Darstellung auf der Bildwiedergabeeinrichtung 24 ergibt (Fig. 6C). Die verbleibenden, vom mittleren Bereich B₁ zum Rand hin verlaufenden zweiten Bereich B_{2L} und B_{2R} sind in Horizontalrichtung stärker gestaucht wiedergegeben, als dies bei der in Fig. 6B gezeigten gleichmäßigen Stauchung über das gesamte Sichtfeld der Fall ist.

Auf diese Weise wird mit der erfindungsgemäßen Umfeld-Darstellungsvorrichtung einerseits eine Vergrößerung des Sichtfeldes bewirkt, andererseits wird durch die Aufweitung im zentralen Bereich des Sichtfeldes, also in Blickrichtung V des Fahrzeug- oder Flugzeugführers, eine realitätskonforme Abbildung erzielt, so dass der Fahrzeug- oder Flugzeugführer 12 seiner Führungsaufgabe uneingeschränkt nachkommen kann.

Die zusätzliche in den verdichteten Randbereichen B_{2L} und B_{2R} vorhandene Information kann der Fahrzeug- oder Flugzeugführer 12 für die Routenplanung und Routenüberwachung nutzen. Ist, wie beispielsweise bei einem Kampfflugzeug, die Überwachung des gesamten Luftraums rund um das Flugzeug erforderlich, so kann die Darstellung auf der Bildwiedergabeeinrichtung 24 einen Winkelbereich von +180° bis -180° umfassen, wie dies im Beispiel der Fig. 1 gezeigt ist. In diesem Fall können einzelne Bereiche des auf der Bildwiedergabeeinrichtung 24 dargestellten Panoramabilds 24' unterschiedlich stark gestaucht sein. So kann beispielsweise der zentrale Bereich B₁, in dem das von einer Kamera aufgenommene reale Bild wiedergegeben wird, unverzerrt wiedergegeben werden. Die sich daran anschließenden seitlichen Bereiche bis etwa +90° auf der einen Seite und -90° auf der anderen Seite, in denen die Tracking-Information in ein virtuelles Umgebungsbild eingeblendet sein kann, können weniger stark gestaucht sein als die stärker gestauchten äußersten seitlichen Randbereiche zwischen -90° und -180° beziehungsweise +90° und +180°, in denen das virtuelle Umgebungsbild dargestellt wird. Eine derart starke Stauchung in diesem Bereich beeinträchtigt die Überwachungsaufgabe kaum.

Die Aufweitung des auf der Bildwiedergabeeinrichtung 24 angezeigten Sichtfeldes führt bei einer Zentralprojektion auf einen ebenen Bildschirm zu Verzerrungen. Daher ist es von Vorteil, wenn in der Bildsignalverarbeitungseinrichtung zunächst rechnerisch eine Zentralprojektion auf eine sphärische Fläche durchgeführt wird und wenn die Daten dieser sphärischen Abbildung anschließend als Abwicklung der sphärischen Projektionsfläche auf eine ebene Projektionsfläche in Bilddaten der ebenen Projektionsfläche umgerechnet und anschließend auf die Größe des Bildschirms der Bildwiedergabeeinrichtung 24 gestaucht werden. Diese Vorgehensweise kann sowohl in der horizontalen Ebene, als auch - alternativ oder zusätzlich - in der vertikalen Ebene durchgeführt werden.

Die so generierte Anzeige entsteht durch eine konzentrische Projektion des Luftraums auf eine sphärische Projektionsfläche. Die Sphäre wird auf die ebene Darstellungsfläche des Bildschirms abgewickelt, so dass die Linien gleicher Elevation und gleichen Azimuts ein orthogonales Gitternetz ergeben. Die Änderung dieser Winkel kann während des Betriebs erfolgen.

Darüber hinaus ist es möglich, einen variablen Anteil dieser gestauchten perspektivischen Außensicht mit einem beliebig wählbaren Stauchungsgrad zu belegen. Die restliche Anzeige wird dann entsprechend ihrer Stauchung angepasst, um weiterhin den gewünschten Ausschnitt des Luftraums abzubilden. So kann beispielsweise der Bildausschnitt in Flugrichtung entzerrt und realitätskonform dargestellt werden, während die restliche Darstellung weiterhin gestaucht ist. Der Flugzeugführer hat die Möglichkeit, einen beliebig großen Ausschnitt des ihn umgebenden Luftraums auszuwählen und perspektivisch anzeigen zu lassen. Dadurch kann die Aufnahme relevanter taktischer und navigatorischer Information hinsichtlich Arbeitseffizienz und Arbeitseffektivität optimiert, die Arbeitsbelastung verringert und die Leistungsfähigkeit von Flugzeugführer und Gesamtsystem gesteigert werden.

Der Bediener (Fahrzeug- oder Flugzeugführer) hat die Möglichkeit, verschiedene Ausschnitte der synthetischen Außensicht mit unterschiedlich starker Stauchung darstellen zu lassen. Beispielsweise sind bei der Betrachtung verschiedener Bereiche des Luftraums für den Flugzeugführer verschiedene Aufgaben relevant. Durch die unterschiedliche Stauchung verschiedener Bildbereiche, kann die künstliche Außensicht den unterschiedlichen Aufgaben angepasst werden. Beispielsweise dient eine realitätskonforme Darstellung in Flugrichtung der Flugführungsaufgabe, eine mäßige Stauchung der Darstellung bis horizontal +/-90° der Routenplanung und eine starke Stauchung des rückwärtigen Luftraumes beeinträchtigt nicht die Überwachungsaufgabe.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 1: Luftfahrzeug
- 1': gepanzertes Fahrzeug
- 2: Umfeld-Darstellungsvorrichtung
- 10: Computer
- 10': Speicher
- 10": Datenleitung
- 11: Cockpit
- 12: Flugzeugführer
- 14: Bilderfassungseinrichtung
- 14': Bilderfassungssensor
- 14": Datenleitung
- 16: Objekterkennungseinrichtung
- 16': Tracking-Sensor
- 16": Datenleitung
- 18: Empfänger
- 18': Antenne
- 18": Datenleitung
- 20: Bilderfassungseinrichtung
- 20': Bilderfassungssensor
- 20": Datenleitung
- 21: Bilderfassungseinrichtung
- 21': Bilderfassungssensor
- 21": Datenleitung
- 22: Bilderfassungseinrichtung
- 22': Bilderfassungssensor
- 22": Datenleitung
- 23: Bilderfassungseinrichtung
- 23': Bilderfassungssensor
- 23": Datenleitung
- 24: Bildwiedergabeeinrichtung
- 25: Bildsignalverarbeitungseinrichtung
- 26: Bilddatenleitung

- α: Bildwinkel
- α₁: Bildwinkel
- α₂: Bildwinkel
- α₃: Bildwinkel
- α₄: Bildwinkel
- β: Bildwinkel
- β₁: Blickwinkel
- β₂: Blickwinkel
- β₃: Blickwinkel
- γ: Bildwinkel
- δ: Bildwinkel
- B₁: mittlerer Bereich
- B_{2L}: verdichteter Randbereich
- B_{2R}: verdichteter Randbereich
- S_{A}: Ausgangsbildsignal
- S_{E10}: Eingangs-Bildsignal
- S_{E14}: Eingangs-Bildsignal
- S_{E16}: Eingangs-Bildsignal
- S_{E18}: Eingangs-Bildsignal
- S_{E20}: Eingangs-Bildsignal
- S_{E21}: Eingangs-Bildsignal
- S_{E22}: Eingangs-Bildsignal
- S_{E23}: Eingangs-Bildsignal

## Patentansprüche

1. Umfeld-Darstellungsvorrichtung mit
- zumindest einer Bildquelle (10, 14, 16, 18; 20, 21, 22, 23);
- einer Bildsignalverarbeitungseinrichtung (25); und
- zumindest einer Bildwiedergabeeinrichtung (24),
- wobei die von der Bildquelle (10, 14, 16, 18; 20, 21, 22, 23) gelieferten Eingangs-Bildsignale (S_{E10}, S_{E14}, S_{E16}, S_{E18}; S_{E20}, S_{E21}, S_{E22}, S_{E23}) der Bildsignalverarbeitungseinrichtung (25) zugeführt werden,
- wobei die Bildsignalverarbeitungseinrichtung (25) die ihr zugeführten Eingangs-Bildsignale (S_{E10}, S_{E14}, S_{E16}, S_{E18}; S_{E20}, S_{E21}, S_{E22}, S_{E23}) zu Ausgangs-Bildsignalen (S_{A}) eines Panoramabildes verarbeitet,
- wobei die Ausgangs-Bildsignale (S_{A}) von der Bildsignalverarbeitungseinrichtung (25) an die Bildwiedergabeeinrichtung (24) zur Anzeige des Panoramabildes weitergeleitet werden, und
- wobei die Bildsignalverarbeitungseinrichtung (25) die Eingangs-Bildsignale (S_{E10}, S_{E14}, S_{E16}, S_{E18}; S_{E20}, S_{E21}, S_{E22}, S_{E23}) derart verarbeitet, dass zumindest ein erster Bereich (B₁) des Panoramabildes unverzerrt oder in einem ersten Stauchungsgrad gestaucht und zumindest ein zweiter Bereich (B_{2L}, B_{2R}) des Panoramabildes in einem zweiten Stauchungsgrad gestaucht wiedergegeben werden, wobei sich der zweite Stauchungsgrad von dem ersten Stauchungsgrad unterscheidet,
- wobei die Bildsignalverarbeitungseinrichtung (25) so ausgebildet ist,
dass der Anteil des unverzerrt beziehungsweise gestaucht wiedergegebenen zumindest einen ersten Bereichs am gesamten Panoramabild variabel wählbar ist,
**dadurch gekennzeichnet,**
- **dass** der jeweilige Stauchungsgrad der gestaucht wiedergegebenen Bereiche beliebig wählbar ist,
- **dass** diese Veränderungen der gestaucht wiedergegebenen Bereiche während des Betriebs der Umfeld-Darstellungsvorrichtung erfolgen,
- **dass** ein einem unverzerrt beziehungsweise gestaucht wiedergegebenen Bereich entsprechender Sichtwinkel in einer horizontalen Ebene zwischen 0° und 360° beliebig wählbar ist, und
- **dass** ein einem unverzerrt beziehungsweise gestaucht wiedergegebenen Bereich entsprechender Sichtwinkel in einer vertikalen Ebene zwischen -90° und +90° beliebig wählbar ist.

2. Umfeld-Darstellungsvorrichtung nach Anspruch 1,
**dadurch gekennzeichnet,**
**dass** die Bildsignalverarbeitungseinrichtung (25) so ausgebildet ist, dass zumindest ein weiterer Bereich des Panoramabildes mit einem vom ersten und zweiten Stauchungsgrad abweichenden weiteren Stauchungsgrad wiedergegeben werden kann.

3. Umfeld-Darstellungsvorrichtung nach Anspruch 1 oder 2
**dadurch gekennzeichnet,**
**dass** eine Mehrzahl von Bildquellen (10, 14, 16, 18; 20, 21, 22, 23) vorgesehen ist, wobei die Blickrichtungen der Bildquellen, ausgehend von einem das Umfeld beobachtenden Bediener (12), um den Bediener (12) herum ausgerichtet sind.

4. Umfeld-Darstellungsvorrichtung nach einem der vorhergehenden Ansprüche,
**dadurch gekennzeichnet,**
**dass** zumindest eine der Bildquellen (10) eine Datenverarbeitungseinrichtung aufweist, die ausgebildet ist, um Bilddaten eines gespeicherten digitalen Geländemodells als Bildsignale (S_{E10}) an die Bildsignalverarbeitungseinrichtung (25) zu übertragen

5. Umfeld-Darstellungsvorrichtung nach einem der vorhergehenden Ansprüche,
**dadurch gekennzeichnet,**
**dass** zumindest eine der Bildquellen (16) von zumindest einem Sensor gebildet ist, der ausgebildet ist, um sich annähernde Objekte zu erfassen und aus der Erfassung resultierende Positionsdaten des Objekts als Bildsignale (S_{E16}) an die Bildsignalverarbeitungseinrichtung (25) zu übertragen.

6. Umfeld-Darstellungsvorrichtung nach einem der vorhergehenden Ansprüche,
**dadurch gekennzeichnet,**
**dass** zumindest eine der Bildquellen (14; 20, 21, 22, 23) von einer Bilderfassungseinrichtung gebildet ist.

7. Umfeld-Darstellungsvorrichtung nach einem der vorhergehenden Ansprüche,
**dadurch gekennzeichnet,**
**dass** die Blickrichtungen der Bildquellen so ausgerichtet sind, dass die Bildquellen zumindest in einer ersten Ebene Bildinformationen eines Sichtfelds mit einem Bildwinkel größer als 120°, vorzugsweise größer als 180°, weiter vorzugsweise 360° erfassen.

8. Umfeld-Darstellungsvorrichtung nach einem der vorhergehenden Ansprüche,
**dadurch gekennzeichnet,**
**dass** der Bereich (B₁) des Panoramabildes, der der Blickrichtung (V) des Bedieners (12) entspricht, unverzerrt wiedergegeben wird.

9. Umfeld-Darstellungsvorrichtung nach einem der vorhergehenden Ansprüche,
**dadurch gekennzeichnet,**
**dass** die Bildsignalverarbeitungseinrichtung (25) Information über die aktuelle Blickrichtung (V) des Bedieners (12) erhält und dass der unverzerrt wiedergegebene Bereich (B₁) des Panoramabildes der aktuellen Blickrichtung (V) des Bedieners (12) entspricht, wenn sich dieser bewegt und dabei seine Blickrichtung ändert.

10. Umfeld-Darstellungsvorrichtung nach einem der vorhergehenden Ansprüche,
**dadurch gekennzeichnet,**
**dass** der Bereich (B₁) des auf der Bildwiedergabeeinrichtung (24) angezeigten Panoramabildes, der unverzerrt wiedergegeben wird, vom Bediener (12) an der Umfeld-Darstellungsvorrichtung (2) auswählbar ist.

11. Umfeld-Darstellungsvorrichtung nach einem der vorhergehenden Ansprüche,
**dadurch gekennzeichnet,**
**dass** die Umfeld-Darstellungsvorrichtung (2) Teil eines Fahrzeugs (1) ist und dass die Bilderfassungseinrichtung(en) (10, 14, 18; 20, 21, 22, 23) am Fahrzeug (1) angeordnet ist beziehungsweise sind und eine zumindest halbkreisförmige Sicht ausgehend vom Fahrzeug (1) liefert beziehungsweise liefern, und/oder
**dass** der unverzerrte Bereich (B₁) des Panoramabildes einen in Fahrtrichtung liegenden Bildsektor wiedergibt.

12. Umfeld-Darstellungsvorrichtung nach einem der vorhergehenden Ansprüche,
**dadurch gekennzeichnet,**
**dass** die Stauchung der Bildwiedergabe ausgehend vom unverzerrt wiedergegebenen Bereich (B₁) des Panoramabildes zu dessen Seiten hin zunimmt.

13. Fahrzeug (1; 1') mit einer Umfeld-Darstellungsvorrichtung (2) nach einem der vorhergehenden Ansprüchen.

14. Fahrzeug nach Anspruch 13,
**dadurch gekennzeichnet,**
**dass** zumindest die Bildwiedergabeeinrichtung (24) in einer vom Fahrzeug (1; 1') entfernt vorgesehenen Fernsteuerungseinheit vorgesehen ist und dass die Bildsignale zwischen dem Fahrzeug (1; 1') und der Fernsteuerungseinheit übertragen werden.

15. Verfahren zur Darstellung eines Panoramabildes für einen Bediener auf einer Bildwiedergabeeinrichtung einer Umfeld-Darstellungsvorrichtung gemäß einem der Ansprüche 1 bis 12 mit den Schritten:
- Bereitstellen von Eingangs-Bildsignalen, die von zumindest einer Bildquelle geliefert werden;
- Verarbeiten der Eingangs-Bildsignale zu Ausgangs-Bildsignalen für das Panoramabild derart, dass zumindest ein erster Bereich des Panoramabildes unverzerrt oder in einem ersten Stauchungsgrad gestaucht und zumindest ein zweiter Bereich des Panoramabildes in einem zweiten Stauchungsgrad gestaucht sind, wobei sich der zweite Stauchungsgrad von dem ersten Stauchungsgrad unterscheidet,
- Weiterleiten der Ausgangs-Bildsignale an die Bildwiedergabeeinrichtung und
- Anzeigen des Panoramabildes auf der Bildwiedergabeeinrichtung;
**dadurch gekennzeichnet,**
**dass** der jeweilige Stauchungsgrad der gestaucht wiedergegebenen Bereiche jeweils individuell beliebig variabel wählbar ist,
**dass** diese Veränderungen der gestaucht wiedergegebenen Bereiche während des Betriebs der Umfeld-Darstellungsvorrichtung erfolgen,
**dass** ein einem unverzerrt beziehungsweise gestaucht wiedergegebenen Bereich entsprechender Sichtwinkel in einer horizontalen Ebene zwischen 0° und 360° beliebig wählbar ist, und
**dass** ein einem unverzerrt beziehungsweise gestaucht wiedergegebenen Bereich entsprechender Sichtwinkel in einer vertikalen Ebene zwischen -90° und +90° beliebig wählbar ist.

## Claims

1. Vicinity presentation apparatus, having
- at least one image source (10, 14, 16, 18; 20, 21, 22, 23);
- an image signal processing device (25); and
- at least one image reproduction device (24),
- wherein the input image signals (S_{E10}, S_{E14}, S_{E16}, S_{E18}; S_{E20}, S_{E21}, S_{E22}, S_{E23}) provided by the image source (10, 14, 16, 18; 20, 21, 22, 23) are fed to the image signal processing device (25),
- wherein the image signal processing device (25) processes the input image signals (S_{E10}, S_{E14}, S_{E16}, S_{E18}; S_{E20}, S_{E21}, S_{E22}, S_{E23}) that have been fed to it to output image signals (S_{A}) of a panorama image,
- wherein the output image signals (S_{A}) are passed on by the image signal processing device (25) to the image reproduction device (24) for displaying the panorama image, and
- wherein the image signal processing device (25) processes the input image signals (S_{E10}, S_{E14}, S_{E16}, S_{E18}; S_{E20}, S_{E21}, S_{E22}, S_{E23}) such that at least one first region (B₁) of the panorama image is reproduced without distortion or with compression of a first degree of compression and at least one second region (B_{2L}, B_{2R}) of the panorama image is reproduced with compression of a second degree of compression, wherein the second degree of compression differs from the first degree of compression,
- wherein the image signal processing device (25) is configured such that the proportion of the at least one first region that is reproduced without distortion or with compression of the entire panorama image is variably selectable,
**characterized**
- **in that** the respective degree of compression of the regions which are reproduced with compression is freely selectable,
- **in that** said changes of the regions which are reproduced with compression are effected during the operation of the vicinity presentation apparatus,
- **in that** a viewing angle that corresponds to a region that is reproduced without distortion or with compression is freely selectable in a horizontal plane between 0° and 360°, and
- **in that** a viewing angle that corresponds to a region that is reproduced without distortion or with compression is freely selectable in a vertical plane between -90° and +90°.

2. Vicinity presentation apparatus according to Claim 1,
**characterized**
**in that** the image signal processing device (25) is configured such that at least one further region of the panorama image can be reproduced with a further degree of compression that deviates from the first and second degrees of compression.

3. Vicinity presentation apparatus according to Claim 1 or 2,
**characterized**
**in that** a plurality of image sources (10, 14, 16, 18; 20, 21, 22, 23) are provided, wherein the viewing directions of the image sources, starting from an operator (12) viewing the vicinity, are oriented around the operator (12).

4. Vicinity presentation apparatus according to one of the preceding claims,
**characterized**
**in that** at least one of the image sources (10) has a data processing device that is configured to transmit image data of a stored digital terrain model in the form of image signals (S_{E10}) to the image signal processing device (25).

5. Vicinity presentation apparatus according to one of the preceding claims,
**characterized**
**in that** at least one of the image sources (16) is formed by at least one sensor which is configured to capture approaching objects and to transmit position data of the object resulting from the capturing in the form of image signals (S_{E16}) to the image signal processing device (25).

6. Vicinity presentation apparatus according to one of the preceding claims,
**characterized**
**in that** at least one of the image sources (14; 20, 21, 22, 23) is formed by an image capturing device.

7. Vicinity presentation apparatus according to one of the preceding claims,
**characterized**
**in that** the viewing directions of the image sources are oriented such that the image sources capture at least in a first plane image information of a field of view with an image angle of greater than 120°, preferably greater than 180°, with further preference 360°.

8. Vicinity presentation apparatus according to one of the preceding claims,
**characterized**
**in that** the region (B₁) of the panorama image that corresponds to the viewing direction (V) of the operator (12) is reproduced without distortion.

9. Vicinity presentation apparatus according to one of the preceding claims,
**characterized**
**in that** the image signal processing device (25) receives information relating to the current viewing direction (V) of the operator (12) and in that the region (B₁) of the panorama image that is reproduced without distortion corresponds to the current viewing direction (V) of the operator (12) when the latter moves and in the process changes their viewing direction.

10. Vicinity presentation apparatus according to one of the preceding claims,
**characterized**
**in that** the region (B₁) of the panorama image that is displayed on the image reproduction device (24) and reproduced without distortion is selectable by the operator (12) on the vicinity presentation apparatus (2).

11. Vicinity presentation apparatus according to one of the preceding claims,
**characterized**
**in that** the vicinity presentation apparatus (2) is part of a vehicle (1) and in that the image capturing device(s) (10, 14, 18; 20, 21, 22, 23) is/are arranged on the vehicle (1) and offers/offer, starting from the vehicle (1), an at least semi-circular view, and/or
**in that** the undistorted region (B₁) of the panorama image produces an image sector that is located in the movement direction.

12. Vicinity presentation apparatus according to one of the preceding claims,
**characterized**
**in that** the compression of the image reproduction, starting from the region (B₁) of the panorama image that is reproduced without distortion, increases towards the sides thereof.

13. Vehicle (1; 1') having a vicinity presentation apparatus (2) according to one of the preceding claims.

14. Vehicle according to Claim 13,
**characterized**
**in that** at least the image reproduction device (24) is provided in a remote control unit provided at a distance from the vehicle (1; 1') and in that the image signals are transmitted between the vehicle (1; 1') and the remote control unit.

15. Method for presenting a panorama image for an operator on an image reproduction device of a vicinity presentation apparatus according to one of Claims 1 to 12, having the steps of:
- providing input image signals that are provided by at least one image source;
- processing the input image signals to output image signals for the panorama image in a manner such that at least one first region of the panorama image is undistorted or compressed with a first degree of compression and at least one second region of the panorama image is compressed with a second degree of compression, wherein the second degree of compression differs from the first degree of compression,
- passing on the output image signals to the image reproduction device, and
- displaying the panorama image on the image production device;
**characterized**
**in that** the respective degree of compression of the regions which are reproduced with compression is in each case individually freely variably selectable,
**in that** these changes of the regions which are reproduced with compression are affected during the operation of the vicinity presentation apparatus,
**in that** a viewing angle corresponding to a region that is reproduced without distortion or with compression is freely selectable in a horizontal plane between 0° and 360°, and
**in that** a viewing angle corresponding to a region that is reproduced without distortion or with compression is freely selectable in a vertical plane between -90° and +90°.

## Revendications

1. Arrangement de représentation de milieu environnant, comprenant
- au moins une source d'image (10, 14, 16, 18 ; 20, 21, 22, 23) ;
- un dispositif de traitement de signal d'image (25) ; et
- au moins un dispositif de reproduction d'image (24),
- les signaux d'image d'entrée (S_{E10}, S_{E14}, S_{E16}, S_{E18} ; S_{E20}, S_{E21}, S_{E22}, S_{E23}) délivrés par la source d'image (10, 14, 16, 18 ; 20, 21, 22, 23) étant acheminés au dispositif de traitement de signal d'image (25),
- le dispositif de traitement de signal d'image (25) traitant les signaux d'image d'entrée (S_{E10}, S_{E14}, S_{E16}, S_{E18} ; S_{E20}, S_{E21}, S_{E22}, S_{E23}) qui lui sont acheminés en des signaux d'image de sortie (S_{A}) d'une image panoramique,
- les signaux d'image de sortie (S_{A}) étant transférés du dispositif de traitement de signal d'image (25) au dispositif de reproduction d'image (24) en vue d'afficher l'image panoramique, et
- le dispositif de traitement de signal d'image (25) traitant les signaux d'image d'entrée (S_{E10}, S_{E14}, S_{E16}, S_{E18} ; S_{E20}, S_{E21}, S_{E22}, S_{E23}) de telle sorte qu'au moins une première zone (B₁) de l'image panoramique est reproduite de manière non déformée ou compressée avec un premier degré de compression et au moins une deuxième zone (B_{2L}, B_{2R}) de l'image panoramique est reproduite de manière compressée avec un deuxième degré de compression, le deuxième degré de compression étant différent du premier degré de compression,
- le dispositif de traitement de signal d'image (25) étant configuré de telle sorte que la part de l'au moins une première zone reproduite de manière non déformée ou compressée peut être sélectionnée de manière variable sur l'image panoramique dans son ensemble,
**caractérisé en ce**
- **que** le degré de compression respectif des zones reproduites de manière compressée peut être choisi à volonté,
- **que** ces modifications des zones reproduites de manière compressée s'effectuent pendant le fonctionnement de l'arrangement de représentation de milieu environnant,
- **qu'**un angle du regard correspondant à une zone reproduite de manière non déformée ou compressée peut être choisi à volonté entre 0° et 360° dans un plan horizontal, et
- **qu'**un angle du regard correspondant à une zone reproduite de manière non déformée ou compressée peut être choisi à volonté entre -90° et +90° dans un plan vertical.

2. Arrangement de représentation de milieu environnant selon la revendication 1, **caractérisé en ce que** le dispositif de traitement de signal d'image (25) est configuré de telle sorte qu'au moins une zone supplémentaire de l'image panoramique peut être reproduite avec un degré de compression supplémentaire divergeant du premier et du deuxième degré de compression.

3. Arrangement de représentation de milieu environnant selon la revendication 1 ou 2, **caractérisé en ce qu'**une pluralité de sources d'image (10, 14, 16, 18 ; 20, 21, 22, 23) sont présentes, les directions du regard des sources d'image, en partant d'un opérateur (12) qui observe le milieu environnant, sont orientées autour de l'opérateur (12).

4. Arrangement de représentation de milieu environnant selon l'une des revendications précédentes, **caractérisé en ce qu'**au moins l'une des sources d'image (10) possède un dispositif de traitement de données qui est configuré pour transmettre au dispositif de traitement de signal d'image (25), sous la forme de signaux d'image (S_{E10}), des données d'image d'un modèle de terrain numérique mémorisé.

5. Arrangement de représentation de milieu environnant selon l'une des revendications précédentes, **caractérisé en ce qu'**au moins l'une des sources d'image (16) est formée par au moins un capteur qui est configuré pour détecter des objets qui s'approchent et pour transmettre au dispositif de traitement de signal d'image (25) sous la forme de signaux d'image (S_{E16}) des données de position résultant de la détection.

6. Arrangement de représentation de milieu environnant selon l'une des revendications précédentes, **caractérisé en ce qu'**au moins l'une des sources d'image (14 ; 20, 21, 22, 23) est formée par un dispositif d'acquisition d'image.

7. Arrangement de représentation de milieu environnant selon l'une des revendications précédentes, **caractérisé en ce que** les directions du regard des sources d'image sont orientées de telle sorte que les sources d'image, au moins dans un premier plan, acquièrent des informations d'image d'un champ de vision ayant un angle de champ supérieur à 120°, de préférence supérieur à 180°, encore de préférence de 360°.

8. Arrangement de représentation de milieu environnant selon l'une des revendications précédentes, **caractérisé en ce que** la zone (B₁) de l'image panoramique qui correspond à la direction du regard (V) de l'opérateur (12) est reproduite de manière non déformée.

9. Arrangement de représentation de milieu environnant selon l'une des revendications précédentes, **caractérisé en ce que** le dispositif de traitement de signal d'image (25) obtient des informations à propos de la direction du regard (V) actuelle de l'opérateur (12) et **en ce que** la zone (B₁) reproduite de manière non déformée de l'image panoramique correspond à la direction du regard (V) actuelle de l'opérateur (12) lorsque celui-ci se déplace et modifie ainsi la direction de son regard.

10. Arrangement de représentation de milieu environnant selon l'une des revendications précédentes, **caractérisé en ce que** la zone (B₁) de l'image panoramique affichée sur le dispositif de reproduction d'image (24) qui est reproduite de manière non déformée peut être sélectionnée par l'opérateur (12) sur l'arrangement de représentation de milieu environnant (2).

11. Arrangement de représentation de milieu environnant selon l'une des revendications précédentes, **caractérisé en ce que** l'arrangement de représentation de milieu environnant (2) fait partie d'un véhicule (1) et **en ce que** le ou les dispositifs d'acquisition d'image (10, 14, 18 ; 20, 21, 22, 23) est ou sont disposés sur le véhicule (1) et délivre ou délivrent une vision au moins en forme de demi-cercle à partir du véhicule (1)
et/ou
**en ce que** la zone (B₁) non déformée de l'image panoramique reproduit un secteur d'image qui se trouve dans le sens du déplacement.

12. Arrangement de représentation de milieu environnant selon l'une des revendications précédentes, **caractérisé en ce que** la compression de la reproduction d'image augmente à partir de la zone (B₁) reproduite de manière non déformée de l'image panoramique vers ses côtés.

13. Véhicule (1 ; 1') comprenant un arrangement de représentation de milieu environnant (2) selon l'une des revendications précédentes.

14. Véhicule selon la revendication 13, **caractérisé en ce qu'**au moins le dispositif de reproduction d'image (24) se trouve dans une unité de télécommande disposée à distance du véhicule (1 ; 1') et **en ce que** les signaux d'image sont transmis entre le véhicule (1 ; 1') et l'unité de télécommande.

15. Procédé de représentation d'une image panoramique pour un opérateur sur un dispositif de reproduction d'image d'un arrangement de représentation de milieu environnant selon l'une des revendications 1 à 12, comprenant les étapes suivantes :
- fourniture de signaux d'image d'entrée qui sont délivrés par au moins une source d'image ;
- traitement des signaux d'image d'entrée en signaux d'image de sortie pour l'image panoramique de telle sorte qu'au moins une première zone de l'image panoramique est non déformée ou compressée dans un premier degré de compression et au moins une deuxième zone de l'image panoramique est compressée dans un deuxième degré de compression, le deuxième degré de compression étant différent du premier degré de compression,
- transmission des signaux d'image de sortie au dispositif de reproduction d'image et
- affichage de l'image panoramique sur le dispositif de reproduction d'image,
**caractérisé en ce**
**que** le degré de compression respectif des zones reproduites de manière compressée peut respectivement être choisi individuellement de manière variable à volonté,
**que** ces modifications des zones reproduites de manière compressée s'effectuent pendant le fonctionnement de l'arrangement de représentation de milieu environnant,
**qu'**un angle du regard correspondant à une zone reproduite de manière non déformée ou compressée peut être choisi à volonté entre 0° et 360° dans un plan horizontal, et
**qu'**un angle du regard correspondant à une zone reproduite de manière non déformée ou compressée peut être choisi à volonté entre -90° et +90° dans un plan vertical.
